Europäisches Patentamt

European Patent Office

Office européen des brevets

(11) Publication number: **0 321 113**
**A2**

## (12) EUROPEAN PATENT APPLICATION

(21) Application number: **88311206.2**

(22) Date of filing: **25.11.88**

(51) Int. Cl.⁴: **H04N 1/10 , H04N 1/387**

(30) Priority: **16.12.87 US 133839**

(43) Date of publication of application:
**21.06.89 Bulletin 89/25**

(84) Designated Contracting States:
**AT BE CH DE ES FR GB GR IT LI LU NL SE**

(71) Applicant: **Ovonic Imaging Systems, Inc.**
**1896 Barrett Street**
**Troy Michigan 48084(US)**

(72) Inventor: **Yaniv, Zvi**
**30257 High Valley Road**
**Farmington Hills Michigan 48018(US)**

(74) Representative: **Jackson, Peter Arthur et al**
**GILL JENNINGS & EVERY 53-64 Chancery**
**Lane**
**London WC2A 1HN(GB)**

(54) Imaging apparatus fo scanning projected and written images.

(57) Line imaging apparatus (10) including at least one elongated, linear array (50) of photosensitive elements (50a), said elongated array adapted to traverse an image bearing surface (13) and provide photogenerated output signals representative of both the image formed on said surface as well as the image projected (36) onto said surface.

EP 0 321 113 A2

## IMAGING APPARATUS FOR SCANNING PROJECTED AND WRITTEN IMAGES

This invention relates to imaging systems which employ arrays of thin film semiconductor photosensors for the photogeneration of electrical signals representative of the shape and color of an image formed on, or projected onto, an image-bearing surface, such as the exposed surface of a white-board. The instant invention particularly relates to a line imaging system for electronic copyboards, which system typically includes an elongated linear array of thin film photosensitive elements.

Electronic imaging or scanning systems are commonly used to transform an image from one form, such as a paper original, to an electronic form, such as a digital or analog signal. Once an image is converted to electronic form, many uses of that signal become possible, including, without limitation, copying of the image onto a piece of paper, projection of the image onto a video display terminal, transmitting the image to a remote location, and subjecting the image to further image processing, such as by a computer, an optical pattern recognition device, etc.

Line imaging systems typically include a linear array of photosensitive elements, such as photosensors, as well as a light source operatively disposed to provide flood illumination of the surface being scanned. It thus becomes possible to either have the image on that image-bearing surface moved in a direction perpendicular to the longitudinal axis of the photosensor array, or have the photosensor array moved in a direction perpendicular to the longitudinal axis of that image-bearing surface so as to scan a stationary image. Since the light reflected from the image-bearing surface varies depending upon the color of the portion of the surface being scanned, a darker portion of the image will reflect less light onto the photosensitive elements of the array, while a lighter portion will reflect a greater amount of light onto the photosensitive elements of the array.

The assignee of the present invention has previously developed an imaging system fabricated with a low cost linear array of thin film photosensitive elements, which elements span an elongated linear distance (such as one-half meter to one meter or more) and which system is capable of scanning and digitizing images on large, light-colored surfaces having one or more square meters of surface area. Furthermore, the aforementioned imaging system was formed from such a linear array of photosensitive elements so as to provide for large image-bearing surfaces to be scanned quickly, efficiently, reliably and in a manner which automatically compensates for variations in image tone, differing characteristics of the individual photosensitive elements thereof and changing illumination conditions. That large, low cost linear array of photosensitive elements additionally featured excellent signal-to-noise ratios and the ability to detect relatively light colors (such as low contrast red, light green and light blue) on a white or light colored background surface; as well as darker colors, such as black, brown, dark blue and dark red, on such a light colored background surface. Finally, a still further feature of the photoresponsive array described therein was the fabrication of that array on a thin, flexible stainless steel substrate for purposes of economy of manufacture, durability and weight. Due to the method of manufacture and the materials utilized in that manufacturing process, the flexible array of thin film photoresponsive elements cannot only be used in ways heretofore impossible with crystalline arrangements so as to scan images and conditions on non-planar and contoured surfaces, but also that array of photosensitive elements can be fabricated in an economical manner not previously possible.

While the aforementioned linear array of photosensitive elements solved problems such as cost reduction, image resolution, color sensitivity and detection capability; the instant inventors became aware of yet another problem which light sensitive scanning arrays had not as yet addressed. Specifically, said inventors noted that in typical symposiums and lectures; slide projectors, movie cameras and overhead projectors are utilized to project various types of electronic images onto a viewing screen, such as a white board. Many times, while discussing and reviewing the subject matter projected onto the viewing screen, the lecturer places marks or other indicia upon those projected images by writing over the projected image. However, neither one of the two types of linear scanning systems heretofore made available for commercial use, i.e., (1) the type wherein the flexible polyester board surface is scrolled past the stationary array of photoresponsive elements, which array is operatively disposed on the rear surface of the board, and (2) the type in which the array of arm-mounted photoresponsive elements traverse and scan past the stationary image-bearing surface; is capable of replicating the image and producing a hard copy of both the image marked on the image-bearing surface as well as the image projected onto that image-bearing surface. This is because, (1) for the scroll-type line imaging system, the projected image obviously cannot follow the scrolled surface about the side of the framework of the board for scanning and replicating at the rear portion thereof, and (2) for the arm-mounted line imaging system, the projected image is shadowed as the arm-mounted array traverses the surface so as to scan and replicate the image disposed thereupon.

It should accordingly be clear that in both of the heretofore described types of line imaging systems, the linear array of photoresponsive elements is only capable of replicating marks formed on said image-bearing surface and not the images projected onto said surface. The result is that the very purpose of providing the linear imager array of photoresponsive elements, i.e., for use at seminars, conferences, or other such formal or informal meetings, has been defeated; such use being to obviate the necessity for the participants to take notes which can interfere with their concentration on the subject of the lecture. However, if the participants are confident that full and complete copies of the image-bearing surface will be provided, they will give the lecturer their undivided attention.

Accordingly, there remains a need in the art for a linear array of photosensitive elements, which linear area is specifically adapted to detect the topical conditions or characteristics of an image-bearing surface, which image-bearing surface is characterized by both marks formed thereon as well as by images projected thereupon.

Note that as used herein, the terms "photoresponsive", "photosensor" and "photosensitive", as applied to the array of discrete pixel elements, have been utilized indiscriminantly and interchangably to refer to the ability of those pixel elements to photogenerate electron-hole pairs in response to incident radiation impinging thereupon.

There is disclosed herein an imaging apparatus adapted to generate a set of electrical signals representative of detectable conditions on an image bearing surface. The apparatus includes an image bearing surface, an elongated arm adapted to moveably extend over at least a portion of said image bearing surface and at least one elongated array of discrete photosensitive elements mounted on said arm. The array is operatively disposed so as not only to scan and replicate non-projected images formed on said surface, but also to scan and replicate images projected onto said surface. Finally, means are provided for moving said arm over said surface so that substantially the entire surface may be scanned and both the images projected onto and the non-projected images formed on the image bearing surface may be replicated in a single movement of said arm. In the most preferred embodiment, two discrete arrays of photosensitive elements are provided, the first array adapted to receive and process input from said non-projected images and the second array adapted to receive and process input from said projected images.

Both of the first and second arrays are substantially coextensive in length as compared to the length of said arm, with each of said photosensitive elements mounted thereon formed frcm at least one thin film layer of amorphous semiconductor alloy material. The photosensitive elements of the first array are operatively disposed closely proximate the image bearing surface to convert light energy emanating from an associated small area portion of said surface and incident thereupon into an electrical signal corresponding to the intensity of said light energy. Each of the photosensitive elements of the said second array is also formed of at least one layer of amorphous semiconductor alloy material and is operatively disposed either for directly receiving projected images, or indirectly receiving projected images reflected from a mirror type of reflector) so as to convert the light energy projected onto a small area portion of said surface into an electrical signal corresponding to the intensity of said light energy.

The image-bearing surface may be rectangularly-shaped, circularly-shaped or of any other substantially planar configuration. The semiconductor alloy material from which the photosensitive elements are formed may be an amorphous alloy of silicon, germanium or silicon-germanium. Regardless of their composition, the photosensitive elements are adapted to operate in a photovoltaic mode wherein the electrical signals photogenerated therefrom correspond to the total amount of light energy received by a given element and integrated over a predetermined period of time.

## BRIEF DESCRIPTION OF THE DRAWINGS

Figure 1 is a perspective view of the dual arrays of photosensitive elements which form the linear imaging system of the present invention and specifically illustrating the use of said system to replicate images formed on and projected onto the image bearing surface of an electronic copy board;

Figure 2 is a cross-sectional side view of the elongated sensing arm of the linear imaging system of the subject invention taken along lines 2-2 of Figure 1;

Figure 2A is a cross-sectional view of the sensing arm of the imaging system of Figure 1 illustrating one embodiment of an optical and illumination system;

Figures 3A, 3B and 3C are fragmentary cross-sectional view of the plurality of layers of amorphous semiconductor alloy material from which the photosensitive elements of the first and second linear arrays of the present invention can be fabricated; and

Figure 4 is a block diagram illustrating the operation of the electronic copy board of the type shown in Figure 1, which board includes the linear imaging system as depicted in Figure 1 of the present invention.

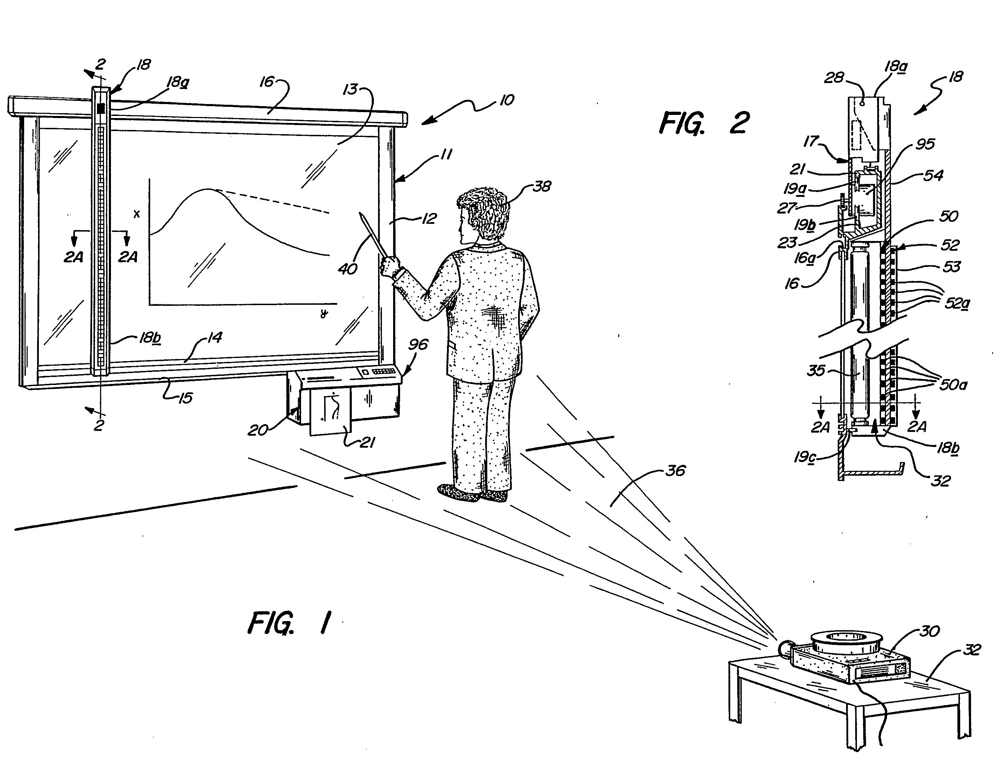

Figure 1 illustrates one embodiment of the linear imaging system 10 of the present invention, as that system 10 is incorporated into and forms a large area imager for an electronic copy board 11 which includes electronic controlling circuitry and a printer 20. The electronic copyboard 11 is sized and configured so as to include a large background, image-bearing surface 13 which is white or of a substantially uniform, preferably light color. The surface 13 is preferably formed of porcelain baked on sheet steel, and may take the form of a white marker board designed for use with erasable, greaseless, colored, felt-tipped marking pens. Such copyboards and marker pens are sold by Quartet Manufacturing Company of Chicago, Illinois, among others.

Alternatively, a large, relatively smooth, light-colored sheet of paper, piece of cardboard or polyester cloth fastened to a rigid board, table or wall could be utilized as a background surface 13 capable of bearing image-bearing and therefore scannable by the linear imaging system of the subject invention.

High resolution embodiments of the linear imaging system 10 could be used, for example, on a drafting table in order to digitize manually prepared line drawings and blueprints for input into computer-aided design systems and the like. "High resolution" in this context generally means a photosensor density in excess of two photosensitive elements per millimeter, and preferably in the range of four to sixteen photosensitive elements per millimeter. Other embodiments of the subject line imaging system 10, having either high or low resolution as needed, could be used in industrial imaging applications. Such applications may include, by way of example and not limitation, inspection of the surface contour of parts or material such as planar sheets of metal, plaster board, plywood, or continuous webs of thin flat sheet metal stock, fabric or paper, for flaws or defects. In this context, it is to be noted that the length of the linear array of photosensitive elements, as developed by the subject inventors, can be precisely tailored to suit any of such applications (said arrays extending from several millimeters to several meters in length).

While the following discussion is specifically directed toward the most preferred embodiment of the subject imaging system 10, as that system is particularly configured and designed to operate with a white or light colored background surface 13 upon which there are created contrasting images, possibly made and projected from black lines or other dark-colored lines, those of even rudimentary skill in the art, after reading the enabling disclosure which follows, will readily be able to adapt this line imaging system to other applications such as those mentioned above. For example, the imaging system 10 can be used with a background surface of virtually any color, including green or black, provided that (1) the symbols or graphics to be scanned (or flaws or defects to be detected) are of a contrasting color, and (2) the signal processing is designed to accommodate the colors of the background and symbols or graphics (or flaws or defects) to be scanned. Further, those skilled in the art will appreciate that it is a simple matter to "reverse" the electronic image so that lines or symbols written marked, formed or projected on the original in light letters on a dark background may be transmitted and printed as though they were dark points, lines or symbols written marked, formed or projected on a light background.

As alluded to hereinabove, the instant invention makes it possible for the first time to form the image bearing surface 13 to be scanned of any size, shape or contour. For example, the scannable portion of the rectangularly-shaped copyboard surface 13 to be imaged typically has a horizontal dimension of 66 inches (167.6 cm) and a vertical dimension of 44 inches (117.8 cm) or of 33 inches (83.3 cm). A rectangular frame 12 preferably surrounds and supports the perimeter of the surface 13 and can, for example, facilitate the mounting of surface 13 on a convenient support, such as a wall. The frame 12 may further include a trough or tray 15 for holding small articles, such as erasers and the aforementioned markers.

The imaging system 10 includes a relatively thin elongated arm 18, which arm preferably comprises an upper and lower housing portion 18a and 18b, respectively. The arm is fabricated of any suitable material such as extruded anodized aluminum, formed steel sheet or injection molded plastic. The lower housing portion 18b of the arm 18 preferably spans substantially the entire vertical distance between the upper frame member 16 and the lower frame member 14. It is within the interior of said arm 18 that there is provided a light source, such as 35, for flood illumination of the image bearing surface and a linear array of photosensitive elements for integrating radiation incident upon and reflected from the image on said image bearing surface 13. The arm 18 also may, and preferably does, house the electronics for conditioning signals photogenerated by the imaging system 10, and for comparing the signals against threshold values to determine whether each photogenerated signal represents a low level or dark image condition of a small area portion of said surface 13 or a high level or light image condition of a small area portion of said surface 13. Also, a linear lens structure may be included within or beneath the arm 18 in lower housing portion 18b.

It is to be specifically noted that the particulars of the structure and operation of the imaging system 10 of the instant invention is substantially similar to the structure and operation of the flexible imaging system disclosed and claimed in U.S. patent No. 4,725,890 issued February 16, 1988, which patent has been assigned to the assignee of the subject invention and the disclosure of which application is incorporated herein by reference. Due to the fact that the electronics and details of operation are specified in said '293 application, the subject disclosure will, for the most part, emphasize the novel concept discovered by the inventor hereof; namely the concept of adapting the imaging system 10, as illustrated in and described with respect to Figures 1-2, for simultaneously scanning and replicating (1) images written, marked or otherwise formed on the surface 13 of a board such as white copyboard 11, as well as (2) images projected onto that whiteboard surface 13.

To that end, Figure 1 further depicts a slide projector 30 (or other similar image projector capable of providing a static image for a sufficiently long time for the elongated arm to traverse the image bearing surface of the copyboard) operatively disposed on a table 32, which table and projector are remotely positioned relative to the copyboard surface 13. The slide projector 30 is of conventional construction and directed to transmit light rays 36 to form a desired image, generally shown as 34, onto said image-bearing surface 13 so that a lecturor, such as 38, is able to discuss that projected image in the context of a prepared presentation. Naturally, during the course of that presentation, it is forseeable that the lecturer may wish to write, mark or otherwise form an image atop the projected image 34 for the purpose of, for instance, emphasis, instruction, or in response to questions. It is for that reason that the lecturor 38 is depicted holding a marker 40 in apparent preparation for modifying the image 34 projected by slide projector 30 upon the image-bearing surface 13 of the electronic copyboard 11.

While the specifics of the structural configuration of said elongated scanning arm 18 will be detailed hereinafter, it must be appreciated that said arm 18 has been particularly designed to accomplish the dual function of scanning the surface 13 of the electronic copyboard 11 for the replication of both marks formed thereon as well as images projected thereupon. It is in this manner that people attending the lecture or other presentation need not take copious notes (which might divert their attention away from the substance of the presentation), but rather said attendees would be able to rely on said electronic copyboard 11 to electrically reproduce the images formed on and projected upon said image bearing surface 13 thereof.

In order to accomplish the task of simultaneously scanning both the marked and projected images, the elongated arm 18 is specially equipped with: (1) a first elongated, linear array of photosensitive elements 50, which first array is specifically positioned internally of said arm 18, directed to receive radiation from the image formed on the bearing surface 13 of the copyboard 11 and adapted to photogenerate electrical signals representative of the shape of the image written, marked or otherwise formed on that image bearing surface 13; and (2) a second elongated, linear array of photosensitive elements 52, which second array is specifically positioned externally of said arm 18, directed to receive radiation (light rays 36) from the image projected onto the image bearing surface 13 of the copyboard 11 and adapted to photogenerate electrical signals representative of the shape of the image projected by slide projector 30 upon that image bearing surface 13.

It is to be appreciated that the first linear array of photosensitve elements 50 and the second linear array of photosensitive elements 52 may be operatively disposed on the opposed surfaces of a planar member 54 which defines the outer wall facing of the movable arm 18. By placing the first and second arrays in close physical relationship relative to one another, the discrete, small area photosensitive elements 50a of the first array 50 and the discrete, small area photoresponsive elements 52a of the second array 52 which correspond to the same small area portion of the image 34 on the image-bearing surface 13 may be electrically connected to the same electronic circuitry. This is possible because the linear imaging system 10 is adapted to replicate images disposed on the image-bearing surface 13 regardless of whether those images are the result of a mark on the image bearing surface or a ray of light projected upon the image bearing surface. Therefore, as long as the electrical signal photogenerated by corresponding ones of said first or said second photosensitive elements is sufficient to either charge or discharge a threshold signal, the image 34 imposed upon the image-bearing surface 13 of the copyboard 13 may be replicated.

More particularly, the electronic circuitry may be connected to both the first array 50 and the second array 52. That circuitry is unconcerned whether the threshold signal is over-ridden by the charge provided by a photosensitive elements 50a or a photosensitive element 52a event, i.e., whether the projected or written image is responsible for providing the requisite signal to one of the photosensitive elements adapted to read the same small area portion of the image 34, the circuitry will identify that small area portion as having created a positive input. While it has been suggested that the first array 50 and the second array 52 could be affixed to the opposite surfaces of the planar outer arm wall 54, in practice it is preferred that the opposite face of the substrate, to which the linear arrays of photosensitive elements are affixed, be available to include the electronics required to accomplish the sensing, comparing and replicating functions.

Several features of the back-to-back attachment of the first array of photosensitive elements 50 and the second array of photosensitive elements 52 to the front face 54 of the elongated arm 18 are noteworthy. First of all, a protective faceplate or protective layer 53 covers the exposed surface of the second array 52 and protects that surface from environmental contamination. Secondly, to insure the successful operation of the dual array imaging system 10 of the instant invention, it is necessary that the discrete photosensitive elements 50a and 52a of the first array 50 and the second array 52 are in substantially perfect alignment so that the discrete element 50a of the first array 50 which correspond to a particular small area portion of the image 34 on the image bearing surface 13 is in substantial alignment with the corresponding discrete element 52a of the second array 52, which element is responsible for scanning and replicating that same, particular small area portion.

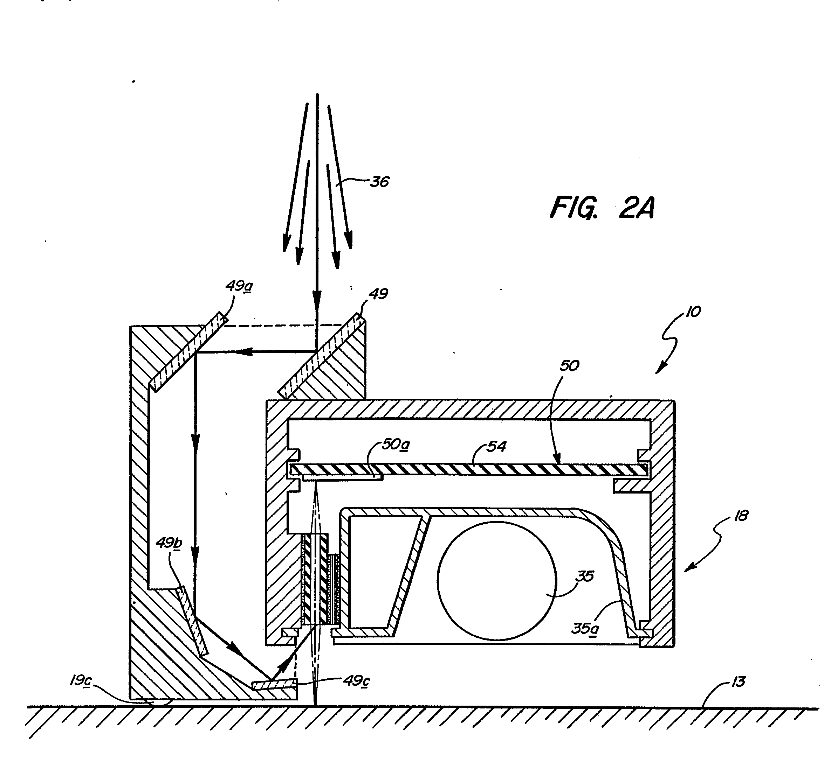

It is to be noted that there is a second embodiment, see Figure 2A, of the instant invention by which a single array of photosensitive elements may be employed so as to replicate image projected onto, as well as images formed, on the surface 13 of a whiteboard 11. In this second embodiment, only one array 50 of photosensitive elements 50a, operatively disposed to face the whiteboard surface 13, is included on the movable arm 18. However, an elongated, angled mirror or mirror-like member 49 is positioned along the front surface of that movable arm so as to cover the surface now occupied by the second linear array of photosensitive elements 52. Since that thin, elongated mirror or mirror-like member is angled relative to the plane of the external surface of the arm which faces the projector 30, rays of projected light 36 may be reflected therefrom, off of other mirrors or mirror-like members 49a, 49b and 49c disposed about the periphery of one of the sides of the movable arm so as to direct those projected rays onto the photosensitive elements 50a associated with that portion of the external surface of the movable arm. In this manner, only a single elongated array of photosensitive elements, such as 50, need be employed.

Referring now specifically to Figure 2, the upper housing portion 18a of the elongated arm 18 and part of the upper frame member 16 of the board 11 are shown in an enlarged cut-away perspective view. The upper housing portion 18a of the movable arm 18 is attached to and supported by a trolley 17 having four wheels 19 (only two of which are illustrated), which wheels transfer substantially all of the weight of the arm 18 to the upper frame member 16. An upper pair of spaced apart wheels 19a bear against and partially envelop an upper, longitudinally extending track 21 and a lower pair of spaced apart wheels 19b bear against and partially envelop a lower, longitudinally extending track 23. The tracks 21 and 23 are preferably rounded or otherwise shaped to rollably engage or mate with the complementarily shaped wheels 19. This four-wheeled trolley arrangement serves to prevent jitter or horizontal oscillatory swaying of the arm 18 as it moves across the image-bearing surface 13. The trolley 17 also preferably includes a drive motor 95 having an axle upon which is mounted a pinion gear 27 that engages a stationary rack attached to or formed on an adjacent surface 16a of the upper frame 16. The drive motor 95 can be any suitable motor such as a synchronous two phase or polyphase motor, but is preferably a conventional stepper motor so as to provide for uniform speed and precise positioning control.

The direction of rotation of the motor 95 can be reversed, thereby allowing the arm 18 to be driven from left to right or from right to left. Further, the electronics for the imaging system 10 provides for the first and second linear arrays of photosensitive elements 50 and 52 disposed on and in the arm 18 to be scanned from top to bottom or from bottom to top, as desired. The scanning operation may be started from either the left edge or right edge of the rectangular frame 12 so that the image-bearing surface 13 can be scanned left to right or right to left. If only a portion of the surface 13 is to be scanned, selected control buttons may be operated to position the arm 18 in a desired position anywhere along the longitudinal extent of the image-bearing surface 13 of the copyboard 11 and commence the scanning operation from that point.

It is essential for successful operation that the arm 18 is uniformly spaced a predetermined distance away from the image-bearing surface 13. Anchored to the lower end 18b of the arm 18 is a roller 19c, said roller adapted to maintain this uniform spaced relationship and to assist in the movement of the arm 18 smoothly across the board. Additional components such as an inverter ballast electrically connected to and powering the elongated fluorescent tube 35 may be included within the arm 18, if desired. The upper arm housing 18a extends above the trolley 17 to provide room for mounting the ballast or other related equipment.

Figure 2 shows a hinge 28 located at the upper portion 18a of the arm 18, which upper portion extends vertically above the trolley frame. The hinge 28 pivotally connects the trolley 17 to the upper arm portion 18a. This pivoting arrangement provides easy access to the face of arm 18 closest to the surface 13 of the copyboard 11 without disassemblying any part of the arm. The arm 18 is thus free to swing outwardly away from the board 11. This facilitates changing the fluorescent tube 34 as well as cleaning of internally located components of the imaging apparatus.

It should be noted that it is preferred that the fluorescent tube 35 is operated at a relatively high frequency such as 20 to 25 kilohertz so that flickering thereof is at a substantially higher rate than the sampling rate of the photosensitive elements and any sound generated by transformers in the ballast from magnetostricture or other effects is above the range audible to the human ear. Such operation requires a high frequency ballast, such as ballast No. 24RS40E available from the Bodine Company of Collierville, Tennessee. The fluorescent tube 35 may, for example, be a Sylvania bulb Catalog No. F032/41K, which is four feet long and produces light having a color temperature of about 410° degrees Kelvin when used in conjunction with the Bodine ballast. The walls of chamber 35a (see Figure 2A) facing the tube 35 are opaque and preferably have a white diffuse surface.

Also provided within the interior of the elongated arm 18 is a photosensor chamber 32 which houses a plurality of identical printed circuit (PC) boards. Each of the first and second arrays 50 and 52 preferably includes 256 individual photosensitive elements 50a and 52a, respectively, arranged in a line and mounted on each PC board. The arrays may comprise of a plurality of photosensor strips placed in end-to-end abutment with each strip including the same fraction of the total number of individual photosensitive elements of the total array, such as 64. The PC boards are aligned in end-to-end abutment so as to effectively form single elongated arrays of photosensitive elements which vertically span the transverse extent of the image-bearing surface 13 between upper and lower frame members 14 and 16, respectively, as shown in Figure 1.

For example, in one embodiment adapted to scan a 44 inch long vertical surface, five PC boards, each having 256 individual photosensitive elements may be used. In a second embodiment of the imaging system, four PC boards, each having 320 individual photosensitive elements may be used. In both of these embodiments, there is a provided total of 1280 individual photosensitive elements. The number of said elements is selected to correspond to the number of elements in the thermal head of the printer 20. The two foregoing examples are particularly suited for use as low resolution scanners, such as those used for making reduced size copies from a whiteboard. A lesser or greater number of photosensitive elements could be used in the elongated arrays depending on the length of the image-bearing surface to be scanned, the resolution requirements, etc.

The light incident on each photosensitive element of the first and second arrays 50 and 52 are converted into usable electrical signals through the use of electronic circuitry which is preferably located in reasonably close proximity to the individual elements, such as on the aforementioned PC boards. Signals generated by circuitry on PC boards are transmitted to circuitry on another board for further processing and then transmitted to the printer or other downstream components located remotely from the arm 18.

Operation of the whiteboard 11 will best be understood with reference to Figure 1. As depicted therein, the arm 18 laterally moves along a plane parallel to the plane of the image-bearing surface 13 of the copyboard 11; the linear fluorescent source 34 illuminates the portion of the image 34 adjacent thereto with the light therefrom reflected from that portion of the image 34 according to the local absorption properties of the image 34 and the optical characteristics of background surface 13. More specifically, portions of the image 34 which are relatively bright reflect a relatively large amount of light, while portions of the image which are relatively dark, reflect very little light.

The light reflected from an elongated local surface area or strip of the image-bearing surface 13 of the copyboard 11 is reflected in all directions, including the direction substantially perpendicular to the surface 13 of the copyboard 11. Therfore, there may be arranged perpendicularly to the surface 13 an elongated linear non-inverting imaging lens array; for example, a one-to-one magnification ratio lens array produced by Nippon Sheet Glass Company, Ltd. of Tokyo, Japan (Selfoc Lens Array, Catalog No. SLA-09). The lens array is a linear array of lenslets, each lenslet having an optical axis which is operatively disposed with an optical axis perpendicular to the surface 13. In addition, the lens array has two focal lines: one focal line appears in the center of the local surface area on the image bearing surface 13 of the copyboard 11, while the second focal line falls on the first linear array 50 of photosensitive elements. Through use of the appropriate optical system, each individual photosensitive element 50a of the linear array 50 is adapted to predominately sense only the light reflected from corresponding small area portions of the image-bearing surface 11 of the copyboard 11.

The linear arrays 50 and 52 includes the aforedescribed plurality of individual photosensitive elements 50a and 52a, respectively, said elements preferably being rectangularly shaped. The individual elements 50a and 52( may be given other geometrical shapes if desired. In the embodiment of the imaging system having a 44 inch (112 cm) long array 50, the center-to-center spacing (pitch) between adjacent elements 50a or 52a is preferably about 0.87 millimeters and the distance separating each element 50a or 52a from adjacent elements 50a or 52a is preferably about .24 millimeters.

When the elongated arrays 50 and 52 of photosensitive elements 50a and 52a, respectively, are formed on a conductive substrate, such as stainless steel, grounding can be provided by contacting the side of the substrate opposite the photosensitive elements 50a and 52a. Preferably, however, the ground or DC common connection is provided to a conductive substrate by passing self-tapping screws through holes in the strip or by grinding or etching away any insulative coating which might be present at convenient locations, and bonding or soldering a flexible conductor hooked to DC common or ground thereto. Failure to properly ground the arrays can lead to a degradation in the signal-to-noise ratio of the signals photogenerated by the discrete photosensitive elements 50a and 52a.

Although the imaging of the instant invention may be practiced with a number of different types of photosensors, such as photoresistors formed of cadmium sulfide, cadmium selenide, amorphous silicon, amorphous germanium and the like; one particularly useful type of photosensitive element is a photovoltaic element, which produces current and voltage upon illumination. Typically, low dark current, relatively high capacitance, photovoltaic cell structures are preferred. One, such cell structure is a photodiode which is capable of operating in the fourth or power-generating quadrant of its I-V curve. In fourth quadrant operation of such photovoltaic structures, the amount of charge generated by each photosensitive element during a given frame or time period is directly proportional to the total amount of radiation incident upon that photosensitive element during that period. Accordingly, the relative darkness or lightness of the small area portion of the image 34 on the image bearing surface 13 received by each element can be determined by measuring or sensing the total integrated charge which has been stored therein.

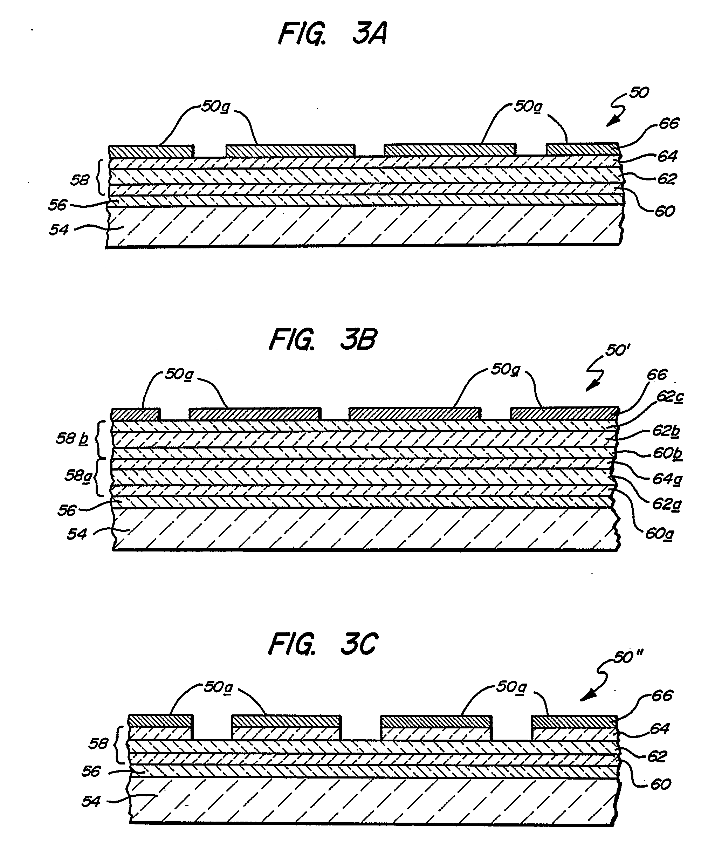

Figure 3A is a cross-sectional view of a portion of one preferred embodiment of an array of photosensitive elements 50, which array includes a plurality of n-i-p type photodiode photosensitive elements 50a. While this description, will refer to the first linear array 50 of photosensitive elements 50a, it should be kept in mind that the structure of second the linear array 52 of photosensitive elements 52a is identical thereto. The array 50 is preferably formed on a conductive substrate 54, which may be stainless steel about 0.007 inches (178 microns) thick, about 0.75 inches (19 mm) wide and about 2.2 inches (55.9 mm) long. Other substrates such as thin metals, or glass, or polymers having an electrically conductive coating thereupon may be similarly employed. Disposed atop the substrate 54 is a layer of back reflective material 56, which may be made of a highly reflective metal such as aluminum, silver or the like and which is approximately 1000 angstroms to 1500 angstroms thick. A very thin layer of chromium (not shown) may also be deposited, if desired, on top of the reflective layer to prevent the back reflector material from diffusing into the subsequently deposited semiconductor layers. It should be noted however, that the use of a back reflector layer is not essential to the photovoltaic operation of the photosensitive elements 50a and accordingly, may be omitted.

Above the reflective layer 56 is a n-i-p multilayered semiconductor diode structure 58, which structure is preferably formed by the consecutive deposition of continuous layers of n type microcrystalline semiconductor alloy material 60, substantially intrinsic amorphous semiconductor alloy material 62, and p type microcrystalline semiconductor alloy material 64. It should be noted at this point that the terms "n-i-p structure" or "n-i-p diode" are meant to refer to all aggregations of n, i and p layers, without regard to sequence, and is specifically meant to include p-i-n as well as n-i-p sequences of layers. Other semiconductor structures such as Schottky barriers, M-I-S devices, N-I-N devices, etc. are applicable with only minor changes to the remainder of the apparatus.

The semiconductor alloy material from which the n-i-p layers 60, 62 and 64 are fabricated is preferably an amorphous alloy of silicon, germanium or germanium and silicon, including at least one density of states reducing element selected from the group consisting of hydrogen and fluorine. As used herein, the term "amorphous" includes all materials or alloys which have long range disorder, although they may have short or intermediate range order, or even contain at times, crystalline inclusions. Also, as used herein, the term "microcrystalline" is defined as a unique class of said amorphous materials characterized by a volume fraction of crystalline inclusions, said volume fraction of inclusions being greater than a threshold value at which the onset of substantial changes in certain key parameters such as electrical conductivity, band gap and absorption constant occurs. The doped layers 60 and 64 may each range in thickness from 50 to 500 angstroms, and preferably each is approximately 100 angstroms thick. The intrinsic layer 62 may range in thickness from 1000 angstroms to 8000 angstroms, and preferably is about 0.6 microns thick.

A continuous layer of transparent, electrically conductive material 66 such as, for example, indium tin oxide (ITO), is next provided atop and in electrical communication with the multilayered photodiode structure 58. The ITO layer 66 is generally about 600 angstroms thick, although its thickness may be varied as is known to those in the art.

Following the deposition of the layer of ITO material 66, the individual photosensitive elements 50a are formed by a patterning process. It has generally been found sufficient to merely pattern the ITO in order to form electrically isolated elements, since the lateral resistivity of the underlying semiconductor material is sufficiently high to provide isolation therebetween. ITO patterning may be accomplished by any one of many techniques available to those skilled in the art. For example, photoresist techniques may be employed in conjunction with an acidic etchant; alternatively, a silk screen stencil may be utilized to apply a pattern of etchant reagent to the ITO layer.

As mentioned previously, processing to remove semiconductor material between individual elements is generally not necessary. Consequently, processing equipment, cost and time are reduced. Since the ITO is significantly more electrically conductive than the underlying semiconductor materials and because the reading of each photosensitive element 50a occurs very quickly, photocurrents created under each rectangular element remain associated with that element and not with adjoining elements. Therefore, the level of cross-talk due to leakage currents is well below the level which could cause a significant degradation in the image.

An alternative construction of linear array 50' of photosensitive elements 50a; which array comprises stacked, tandem p-i-n photodiodes is shown in Figure 3B (in which like reference numerals refer to like elements). In this construction, the stainless steel layer 54 is overlaid by the conductive reflector layer 56 and additionally two amorphous semiconductor p-i-n diodes 58a and 58b disposed in optical and electrical series relationship. Each diode 58a and 58b is constructed by the consecutive deposition of a layer of n type microcrystalline semiconductor alloy material 60a and 60b, a layer of intrinsic semiconductor alloy material 62a and 62b, and a layer of p type microcrystalline semiconductor alloy material 64a and 64b. The thickness of the n and p layers may be the same as in diode 58 of Figure 3A. However, the thickness of the intrinsic layers will generally vary. Since the topmost intrinsic layer is nearest to the source of illumination, it will receive a higher flux of radiation than will the subjacent intrinsic layer. In order to match the photocurrents produced in the two layers, the topmost layer is made thinner than the subjacent layer. The thickness of the intrinsic layer 62b of the upper diode 58b in Figure 3B is preferably 3000 angstroms, while the thickness of the intrinsic layer 62a of the lower diode in Figure 3B is preferably about 5000 angstroms. Above the stacked photodiodes 58a and 58b is a layer of ITO 66 which is configured as previously described with respect to Figure 3A, so as to provide the desired shape of photosensitive elements.

Another configuration of a n-i-p type array 50″ of photosensitive elements 50a is shown in Figure 3C (wherein like reference numerals refer to like elements). Disposed upon the stainless steel layer 54 and the reflector layer 56 is an n type layer of microcrystalline semiconductor alloy material 60, a layer of substantially intrinsic semiconductor alloy material 62, a p type layer of microcrystalline semiconductor alloy material 64, and an ITO layer. Following the deposition of these layers, both the ITO and p type semiconductor layers are patterned so as to produce the photosensitive elements 50a. It has been found advantageous, in some instances, to etch away the p type semiconductor layer to further prevent cross-talk between individual photosensitive elements 50a.

Amorphous silicon or germanium alloy semiconductor material is preferably deposited in one or more contiguous layers by plasma-assisted chemical vapor deposition, i.e., glow discharge, as disclosed, for example, in United States Patent No. 4,226,898 which issued on October 7, 1980 in the names of Stanford R. Ovshinsky and Arun Madan, and in United States Patent No. 4,485,389 which issued on November 27, 1984 in the names of Stanford R. Ovshinsky and Masatsugu Izu, the disclosures of which are incorporated herein by reference.

The collection efficiency of the p-i-n photodiodes 50, 50', and 50″ illustrated in Figures 3A and 3B at one or more ranges of selected wavelengths of incident light may be altered or optimized by intentionally adjusting the band gap and/or thickness of each intrinsic layer 62. Such band gap adjustment techniques are known in the art of amorphous semiconductor solar cell design, and are disclosed, for example, in U.S. Patent No. 4,342,044 which issued on July 27, 1982 in the names of S.R. Ovshinsky and M. Izu, the disclosure of which is incorporated herein by reference. The collection efficiency for different wavelengths of light can also be optimized by the presence of absence of reflecting layer 56, by varying the thickness of the ITO layer or by utilizing optical filters. In this regard it should be noted that the response to IR radiation is particularly desirable and the photosensitive elements 50a and 52a can be so tailored for responding thereto.

Although the linear arrays 50 and 52 of photosensitive elements are described in Figures 3A-3C as thin film p-i-n amorphous silicon or germanium alloy photodiodes, any other thin film photoresponsive devices made from semiconductor materials which may be deposited over large areas or lengths with suitable photoresponsive and electronic characteristics, may be used. Thin film heterojunction photodiodes, Schottky barrier photodiodes or MIS (metal-insulator-semiconductor) type photodiodes may be used, for example. Also, semiconductor materials such as gallium arsenide, cadmium sulfide, copper indium diselenide and other such materials may be employed in the practice of the instant invention.

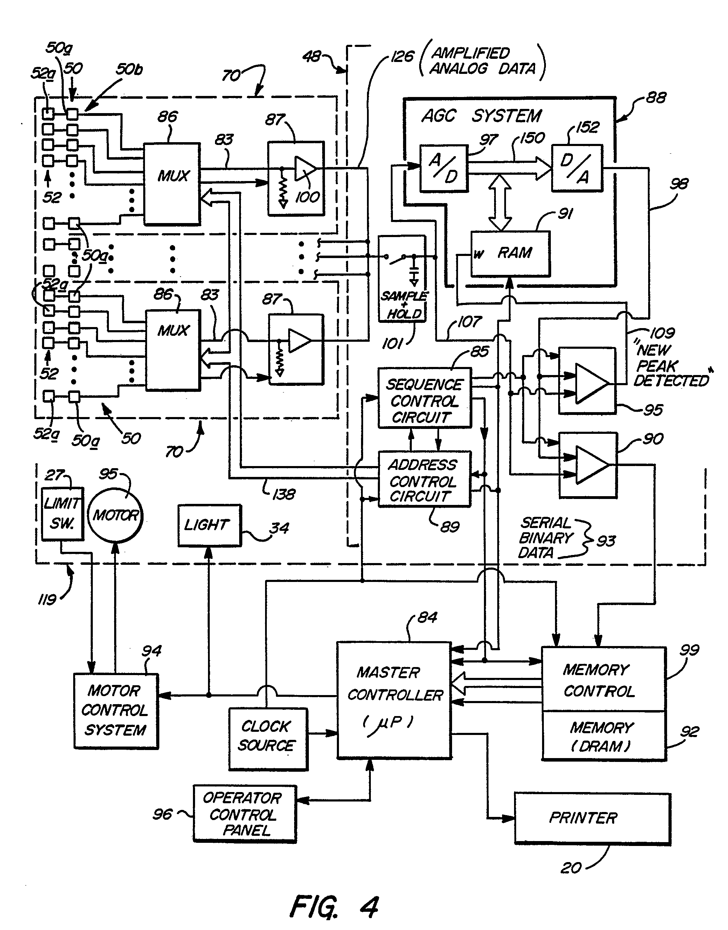

Figure 4 is a general block diagram of the preferred circuitry for the electronic copyboard 11 of the type shown in Figure 1. The various blocks of circuitry and components preferably included as part of the imaging system 10 and located within the arm 18 are shown in Figure 4 above the horizontal dashed line identified by reference numeral 119. The circuitry and components of the electronic copyboard 11 which preferably do not constitute part of the arm 18 are depicted below this horizontal dashed line. The blocks or circuitry of the imaging system 10 which control the timing and order in which signals are obtained from the individual photosensitive elements of the linear sensor arrays 50a and 52a are shown in the upper right portion of Figure 4. This control circuitry is preferably located on a single PC board. The upper left portion of Figure 4 shows, in block diagram form, the circuitry of two representative PC boards 70, the locations of which are indicated with dashed lines. Each board 70a contains linear subarrays 50b and 52b that constitutes part of the larger linear arrays 50 and 52 respectively. The remaining PC boards are not shown in Figure 4, but their absence is indicated by lapses between the two PC boards 70 that are shown.

The functions of the various blocks of circuitry in Figure 4 can best be described by generally explaining the operation of the imaging system 10. The linear array 50 receives light reflected from the surface 13 being imaged and the linear array 52 received light rays 36 from the projector 30 onto the surface 13 of the copyboard 11. A master controller 84, which is preferably microprocessor-based, is provided to control the overall operation of the electronic copyboard 11, i.e., to initiate the operation of imaging system 10, and to coordinate operation of the printer 20 and movement of the arm 18. Microprocessor 84 initiates operation of the imaging system 10 when it receives a "start of scan" signal from the sequence control circuit 85, which signal allows address control circuit 89 to generate binary addresses corresponding to individual elements 50a and 52a in the arrays 50 and 52. The addresses are fed out on address bus 138 to multiplexers 86 in each of the PC boards 70. The multiplexer 86 of each PC board (1) recognizes selected addresses impressed on bus 138 which correspond to specific photosensitive elements 50a and 52a, (2) sequentially obtains analog signals produced by the selectively addressed photosensitive elements and (3) feeds these analog signals in multiplexed fashion onto an intra-board analog bus 83. After passing through an amplifier and isolator circuit 87 which includes an amplifier 100, the multiplexed signals are fed over an interboard analog bus 126 to a sample and hold circuit 101. An automatic gain control (AGC) system 88 is provided to generate a variable threshold signal on line 98 so as to determine whether the amplified photosensor signal just received from bus 126 by sample and hold circuit 101 represents a light or dark small area portion of the overall image 34. The light-dark distinction is made by comparator circuit 90, which produces a digital output signal on line 93. The sample and hold circuit 101 is adapted to receive and hold the amplified photosensor signal on output line 107 without change for a brief period to facilitate making this comparison. If desired, the amplitude of variable threshold signal from AGC system 88 that is impressed on line 98 may be reduced by some fixed value by placing a signal divider network between line 98 and the negative input to comparator circuit 90.

The multiplexers 86 and amplifiers 100 are preferably located in close proximity to the photosensitive elements 50a and 52a they service, in order to minimize conductor lengths, reduce fabrication costs, and minimize pick up of electrical noise on low power signal lines. For the same reasons, automatic gain control system 88, comparator circuit 90 and other blocks of circuitry on PC board 48 are preferably located within the lower arm portion 18b. The output signals produced by comparator circuit 90 are sent via line 93 to memory control circuit 99 for further processing and conditioning relating to properly driving printer 20. Circuit 99 puts the output signals into proper format for storage in memory 92 or for being sent to printer 20. Circuit 99 may include a counter system which independently keeps track of the current address generated by address control circuit 89.

Circuit 99 may be implemented with a conventional programmable logic array.

The output signals of comparator circuit 90 perferably take the form of a serial digital bit stream representing the light or dark state of the photosensitive elements 50a and 52a as determined by sequentially reading them (that is, sensing the level of the charge stored on them). The multiplexed binary information produced by comparator circuit 90 may, if desired, be stored in a memory 92 (which may contain approximately 512 kilobytes of data in 8 bit bytes). Under control of microprocessor 84, data from memory control circuit 99 or stored data from memory 92 is sent to the printer 20. The use of memory 92 for data storage makes it possible to obtain additional copies of the last image 24 on the image-bearing surface 13 scanned by the arm 18 without the need to operate arm 18 again.

A modified form of the imaging system of Figure 4 can be created by eliminating memory 92 and sending the serial data signals from conductor 93 through a conventional serial-to-parallel conversion circuit associated with memory control circuit 99 and then through microprocessor controller 84 to printer 20. While this will require a scan of arm 18 for each copy of the image which may be desired, the absence of the memory IC chips required for memory 92 will provide for an especially economical imaging system of the present type. Almost all of the memory control circuit 99 including the programmable array logic can be omitted to further reduce costs.

Conventional print control signals are produced by microprocessor 84 and sent to the printer 20. The microprocessor 84 further operates a motor control system 94 which energizes drive motor 95 to cause arm 18 to scan the surface 13 of the copyboard 11 from either the right or the left. The motor control system 27 preferably includes two conventional limit switches 26 which may be mounted on the trolley of arm 18 are previously described in Figure 2, to detect end-of-board-surface conditions (an appropriately placed cam) when the arm 18 is at the far right or far left side of the board. Microprocessor 84 also activates the light source when a copy is to be made of the image on surface 10, and switches if off afterwards.

By means of user control buttons located on an operator control panel 96 which is preferably mounted on or near the printer housing, microprocessor 84 can be instructed to perform desired operations, such as "COPY", "STOP/CLEAR", "MOVE ARM LEFT", "MOVE ARM RIGHT" and to provide multiple or scaled copies.

Individual photosensitive elements 50a and 52a may have photoresponsive characteristics which differ appreciably. Likewise, their associated electrical circuits and connections, including those within multiplexer 86 and amplifier circuit 87 all the way to analog bus 126, may have also differing electrical characteristics. Thus, equal amounts of light on respective elements may produce significantly different signal levels on bus 126. The photoresponsive and/or electrical characteristics of individual photosensitive elements and associated circuits may also change with time due to aging of optical or electrical components. The contrast of the image 34 to be scanned may vary greatly, due to the use of colors of widely differing hue and saturation and due to changing illumination conditions, discoloration of the board surface 13, and the like.

To minimize the impact of such image variables and to assist in producing high quality images, automatic gain control system 88 is provided. AGC system 88 includes memory 91, which preferably is a random access memory having sufficient size to store at least a word or byte of information for every photosensitive element in arrays 50 and 52. the word or byte size is preferably 8 bits in RAM 91. The information stored in discrete word locations in RAM 91 preferably corresponds to the highest signal levels produced by the individual photosensitive elements 50a and 52a during the current transverse scanning movement of the arm 18 from one side of the surface 13 to the other side. The AGC system 88 helps improve the performance of the imaging system 10 by effectively customizing the comparison made at comparator circuit 90 to take into account the individual optical and electrical characteristics of each element, as determined under very recent dynamic conditions during the current transverse scanning movement of arm 18.

The AGC system 88 preferably operates as follows. At the beginning of a scan, the sequence control circuit 85 sends a "Clear" signal to RAM 91, causing all memory locations therein to be cleared or set to zero. Thereafter, in synchronism with the operation of multiplexer 86, and in conjunction with the address produced by address control circuit 89, data stored in the word location of RAM 91 addressed by address generator 89 is read and converted to analog form by digital-to-analog (D/A) converter 152. The output of D/A converter 152 is compared with the current signal on analog bus 107. (In practice, the current value may be and preferably is scaled downward by a fixed percentage.) Signal 98 is supplied to one input of comparator circuit 90. The voltage supplied on line 107 to the other input of comparator 90 is the amplified signal generated by the presently addressed photosensitive element 50a and 50b, which was received and held by sample and hold circuit 101. If the signal produced by D/A converted 152 is less than the held signal on line 107, the instant signal level from the specific photosensor being addressed must be higher than any previously encountered signals, and the comparator circuit 95 sends via line 109 a "write" signal to RAM 91, which loads a new value into the presently addressed location in RAM 91. The new value is obtained from the amplified photosensor signal on analog bus 126 which has been converted to digital form by analog-to-digital (A/D) converted 97, and placed on digital bus 150. If the held signal on line 107 is less than the signal produced by D/A converter 152, no "write" signal is sent to RAM 91 and the contents of the currently-addressed location of RAM 91 are unchanged.

Using this method, the contents of the locations in RAM 91 (wherein each location corresponds to a different element in the arrays 50 and 52) are updated whenever the current signal level of an addressed photosensitive element 50a and 52a is higher than the levels previously produced by the same elements during the current transverse scanning movement of arm 18. Through this operation, RAM 91 collects a set of digital values which represent both the efficiency of the optical channel of each of the elements 50a and 52a in the arrays 50 and 52 and the efficiency of the electrical channels leading from each element to analog bus 126. These efficiency measurements take in account variations in both light source 34, the optical path, and in the photoconversion efficiency of the photosensitive elements. The amplitude of the output signal or voltage on line 98 produced by D/A converted 152 thus represents maximum brightness received by the corresponding photosensitive element 50a and 52a since arm 18 has begun its present scanning motion.

To achieve maximum linearity of the individual photosensitive elements 50a and 52a when operating in the photogenerative mode, it is preferred that the photosensors, when under full illumination (i.e., sensing a fully white surface) only charge to 10 to 20 percent to their open circuit voltage $V_{OC}$ (i.e., the maximum charge and voltage of the solar cell if allowed to charge indefinitely). For the single diode and tandem configurations of Figure 3A and 3B, the $V_{OC}$ is about 0.6 volts and 1.2 volts respectively. The intensity of the illumination provided by a light source on thin strip of the image 34 being scanned directly affects the rate at which the photosensitive elements will charge. Under illumination levels about $1 \times 10^{-4}$ watts $cm^{-2}$ the charging times required for tandem diode photosensitive elements 50a and 50b of the type shown in Figure 3B to achieve 10 to 20 percent of $V_{OC}$ is on the order of one to ten milliseconds; and is typically three to eight milliseconds, depending on the spectral distribution of the incident light, optical absorption by the lens array, the spectral response or collection efficiency of the photosensitive elements, and the like.

It has been determined that a linear array as described herein, and fabricated from amorphous silicon alloy semiconductor material, and operated in the fourth quadrant mode as described herein, is very well suited for high speed image scanning. Such a linear array has the ability to supply analog (video) data at rates sufficient to meet CCITT Group 2 and Group 3 facsimile standards. It has also been found that signal-to-noise ratios and "gray scale" detection capabilities are also excellent, in spite of the very low voltage and charge generating capabilities of the individual photosensitive elements.

In the embodiment described hereinabove, where the address on the bus is changing at a frequency of about 187.5 kilohertz, a single scan of all 1280 photosensitive elements in the overall array takes approximately 6.8 milliseconds. This speed averages out to a net total of about 5.33 microseconds per photosensitive element. It is preferred to actually read each photosensitive element within a period of approximately four microseconds or less. The actual time required to read each photosensitive element by sample and hold techniques can be in the range of about two microseconds or less. Following each scan, an interval of about 0.7 milliseconds is preferably provided before the next scan begins, during which time the microprocessor 84 performs house-keeping functions, which include checking the pushbuttons at the operator control station, checking the end-of-board-surface limit switches, and similar routine status checks. The repetition period for the scanning operation is thus about 7.5 milliseconds. The outputs of the photosensitive elements 50a and 52a in array 50 and 52 are preferably read consecutively in accordance with monotonically changing value of the 11-bit address input provided to the circuitry on PC board 70. The analog data thus read is sent from the PC boards 70 via analog bus 126 for automatic gain control and comparison processing.

The printer 20, when fed the appropriate signals originating from arm 18, produces a copy 22 of the original image 34 placed on the surface 13. As shown in Figure 1, the copy 21 is preferably a reproduction of the original image 34 which is substantially reduced in size. Printer 20 can be any convenient form of printer, such as one using thermally sensitive paper. One suitable thermal printer for making reduced size copies is Model No. HZ-1X01-PM made by Sharp Electronics Co. Ltd. of Japan which prints a line, consisting of up to 1280 dots, on letter size paper (e.g., paper about 21.5 cm wide by about 27.8 cm to 35.5 cm long) at a horizontal resolution of six dots/mm and a vertical resolution of six lines/mm. Other types of printers such as dot matrix, ink jet or laser printers may be similarly employed.

While specific preferred embodiments of the present invention have been described in detail, it will be appreciated that the invention is susceptible to modification, variation and change without departing from the spirit or scope of the present invention, which is to be limited only by the following claims.

## Claims

1. Imaging apparatus (10) for generating a set of electrical signals representative of detectable conditions on an image-bearing surface (13), comprising an image-bearing surface; an arm (18) adapted to movably extend over at least a portion of said surface; said apparatus characterized by:
at least one array (50) of discrete photosensitive elements (50a) mounted on said arm; the array operatively disposed so as to scan (1) non-projected images formed on said surface; and (2) images (36) projected onto said surface; and
means (95) for moving said arm over said surface, whereby substantially the entire surface may be scanned and both the image projected onto and the non-projected image formed on the surface may be replicated.

2. Apparatus as in Claim 1, further including at least two arrays of photosensitive elements, a first array adapted to scan said non-projected images and a second array (52) adapted to scan said projected images.

3. Apparatus as in Claim 2, wherein said first and second arrays are elongated with each of said photosensitive elements formed from at least one thin film layer of amorphous semiconductor alloy material (60, 62, 64); and
each element of said first array operatively disposed closely proximate said surface to convert light energy emanating from an associated portion of said surface and incident thereupon into an electrical signal corresponding to the intensity of said light energy.

4. Apparatus as in Claim 2, wherein said first and second arrays are electrically interconnected to the same downstream signal processing circuitry (119) for superposing said signals received from said photosensitive elements.

5. Apparatus as in Claim 2, wherein said surface is rectangularly-shaped and said arm is adapted for linear movement thereacross.

6. Apparatus as in Claim 2, wherein said image-bearing surface is circularly shaped and said arm is adapted for rotational movement thereacross.

7. Apparatus as in Claim 2, further comprising means (35a) on said arm for directing light energy onto said surface portions for reception by said first array of photosensitive elements.

Apparatus as in Claim 2, including an elongated lens array mounted on said arm and respectively associated with said first array of photosensitive elements for focusing light energy emanating from said surface portions onto the corresponding photosensitive elements.

FIG. 2

FIG. 1

EP 0 321 113 A2

FIG. 2A

EP 0 321 113 A2

## FIG. 3A

## FIG. 3B

## FIG. 3C

FIG. 4